# EUROPEAN PATENT APPLICATION

(11) **EP 4 481 909 A1**
(43) Date of publication of application: **25.12.2024**
(21) Application number: 23756123.8
(22) Date of filing: 26.01.2023
(51) Int. Cl.: H01M 50/152, H01M 50/107, H01M 50/164, H01M 50/167, H01M 50/179, H01M 50/533, H01M 50/571, H01M 50/627

(54) **CYLINDRICAL BATTERY AND METHOD FOR MANUFACTURING SAME**

(30) Priority: 16.02.2022 JP 2022022033
(71) Applicant: Panasonic Energy Co., Ltd., Osaka 570-8511 (JP)
(72) Inventor: OKIMOTO, Ryota, Kadoma-shi, Osaka 571-0057 (JP); HASEGAWA, Takasumi, Kadoma-shi, Osaka 571-0057 (JP)
(74) Representative: Novagraaf International SA
(86) International application number: PCT/JP2023/002366
(87) International publication number: WO 2023/157595

(57) **Abstract**

Provided is a cylindrical battery (10) comprising an outer covering can (16) which is in a bottomed cylindrical shape and accommodates an electrode body (14) and a sealing body (17) which closes an opening portion of the outer covering can (16), the sealing body (17) includes a current-collection plate (25) and a cap (26) which is placed on and secured to the current collection plate (25), and the current collection plate (25) includes a securing means which secures the outer peripheral portion of the cap (25).

## Description

### TECHNICAL FIELD

The present disclosure generally relates to a cylindrical battery, and a method for manufacturing the same.

### BACKGROUND ART

A cylindrical battery such as a non-aqueous electrolyte secondary battery is generally manufactured through steps of, after inserting an electrode assembly into an outer housing can, forming a grooved portion in the outer housing can, and injecting an electrolytic solution into the outer housing can. Then, it is manufactured through steps of, after welding a sealing assembly and a positive electrode tab together, placing the sealing assembly on the grooved portion of the outer housing can, and caulking and sealing the outer housing can. In the cylindrical battery manufactured through these steps, a caulking portion of the outer housing can may be corroded by the electrolytic solution inside the battery.

Regarding the structure of the sealing assembly of the cylindrical battery, PATENT LITERATURE 1 discloses a cylindrical battery that has a sealing assembly formed by laser-welding a first plate-shaped member to a second plate-shaped member. PATENT LITERATURE 2 discloses a method for fitting a cap and a safety vent that form a sealing assembly.

### CITATION LIST

### PATENT LITERATURE

PATENT LITERATURE 1: Japanese Patent No. 6254102
PATENT LITERATURE 2: Japanese Unexamined Patent Application Publication No. 2010/277785

### SUMMARY

It is considered as a factor why corrosion occurs in the caulking portion of the outer housing can that an electrolytic solution is accumulated above the grooved portion of the outer housing can. Removing the electrolytic solution accumulated above the grooved portion of the outer housing can can eliminate the factor why the corrosion occurs, but increases the tact time and is impractical.

It is an advantage of the present disclosure to provide a cylindrical battery that can suppress corrosion of a caulking portion of an outer housing can without causing an electrolytic solution to be accumulated above a grooved portion during manufacturing steps.

A cylindrical battery according to the present disclosure comprises a bottomed cylindrical outer housing can that houses an electrode assembly, and a sealing assembly that seals an opening of the outer housing can, in which the sealing assembly has a current collector plate, and a cap that is placed and fixed on the current collector plate, and the current collector plate has fixing portion for fixing an outer circumferential portion of the cap.

The cylindrical battery according to the present disclosure can suppress corrosion of the caulking portion of the outer housing can without causing an electrolytic solution to be accumulated above the grooved portion during the manufacturing steps.

### BRIEF DESCRIPTION OF DRAWING

FIG. 1 is a sectional view of a cylindrical battery of an embodiment.
FIG. 2 is a partial enlarged sectional view illustrating a method for manufacturing a sealing assembly of an embodiment.
FIG. 3 is a diagram illustrating a structure of a sealing assembly of another embodiment.
FIG. 4 is a partial enlarged sectional view of the sealing assembly of FIG. 3.
FIG. 5 is a partial enlarged sectional view of a sealing assembly of a conventional cylindrical battery.

### DESCRIPTION OF EMBODIMENTS

Hereinafter, embodiments of the present disclosure will be described in detail with reference to the drawings. In the following description, specific shapes, materials, directions, numeral values, and the like are exemplary illustrations for easy understanding of the present disclosure, and they can be properly modified to meet the usage, purpose, specifications, and so on. The selective combination of components of embodiments and modified examples, which are described below, are anticipated in advance.

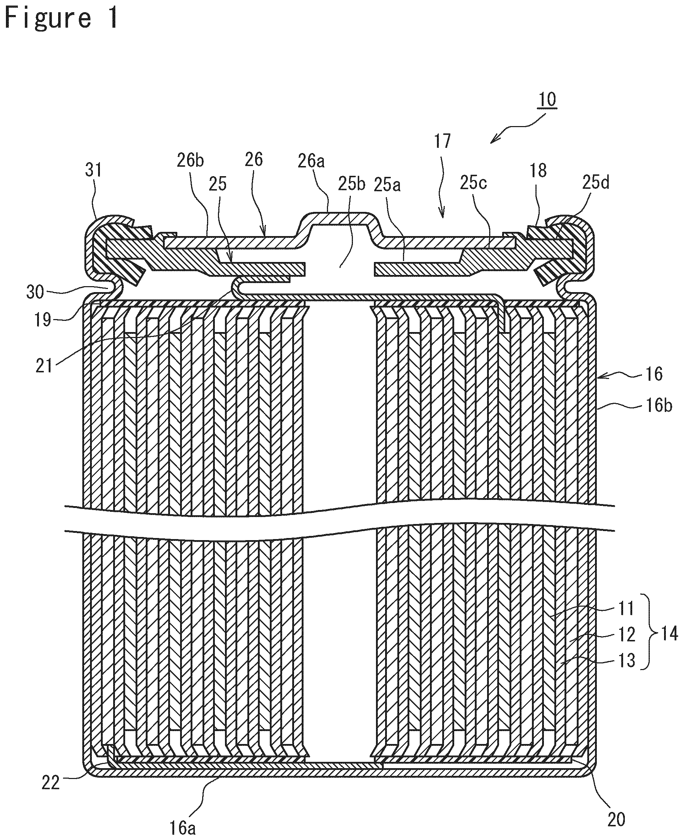

Hereinafter, an example of embodiments of a cylindrical battery 10 according to the present disclosure will be described in detail with reference to the drawings. FIG. 1 is a sectional view of the cylindrical battery 10 of an example of embodiments.

<First Embodiment>

As illustrated in FIG. 1, the cylindrical battery 10 comprises a bottomed cylindrical outer housing can 16 including a bottom face 16a and a side wall 16b, a sealing assembly 17 that seals an opening of the outer housing can 16, and a gasket 18 interposed between the outer housing can 16 and the sealing assembly 17. The cylindrical battery 10 comprises an electrode assembly 14 and an electrolyte (electrolytic solution) that are housed in the outer housing can 16. The electrode assembly 14 includes a positive electrode 11, a negative electrode 12, and a separator 13, and has a structure in which the positive electrode 11 and the negative electrode 12 are spirally wound with the separator 13 interposed between the positive electrode 11 and the negative electrode 12.

In this specification, for convenience of explanation, the direction along an axial direction of the outer housing can 16 is defined as a "longitudinal direction or an up-and-down direction", the sealing assembly 17 side (an opening side of the outer housing can 16) of the cylindrical battery 10 is defined as "upper", and the bottom face 16a side of the outer housing can 16 is defined as "lower".

The positive electrode 11 has a positive electrode core, and a positive electrode mixture layer formed on at least one face of the core. For the positive electrode core, there can be used a foil of a metal such as aluminum or an aluminum alloy which is stable in a potential range of the positive electrode 11, a film in which such a metal is provided on a surface layer thereof, and the like. The positive electrode mixture layer includes a positive electrode active material, a conductive agent such as acetylene black, and a binder such as polyvinylidene fluoride, and is preferably formed on each face of the positive electrode core. For the positive electrode active material, there is used, for example, a lithium-transition metal composite oxide.

The negative electrode 12 has a negative electrode core, and a negative electrode mixture layer formed on at least one face of the core. For the negative electrode core, there can be used a foil of a metal such as copper or a copper alloy which is stable in a potential range of the negative electrode 12, a film in which such a metal is provided on a surface layer thereof, and the like. The negative electrode mixture layer includes a negative electrode active material and a binder such as styrene-butadiene rubber (SBR), and is preferably formed on each face of the negative electrode core. For the negative electrode active material, there is used, for example, graphite, or a silicon-containing compound.

The electrolyte may be an aqueous electrolyte, or may be a non-aqueous electrolyte. In the present embodiment, a non-aqueous electrolyte is used for the electrolyte. The non-aqueous electrolyte includes a non-aqueous solvent, and an electrolyte salt dissolved in the non-aqueous solvent. For the non-aqueous solvent, there can be used, for example, esters, ethers, nitriles, amides, and a mixed solvent containing two kinds or more of these solvents. The non-aqueous solvent may also contain a halogen-substituted product obtained by substituting at least a part of hydrogen of these solvents with a halogen atom such as fluorine. For the electrolyte salt, there is used, for example, a lithium salt such as LiPF₆.

The cylindrical battery 10 comprises insulating plates 19 and 20 arranged on the upper and lower sides of the electrode assembly 14, respectively. In the example illustrated in FIG. 1, a positive electrode tab 21 connected to the positive electrode 11 extends to the sealing assembly 17 side through a through hole in the insulating plate 19, and a negative electrode tab 22 connected to the negative electrode 12 extends to the bottom face 16a side of the outer housing can 16 along the outside of the insulating plate 20. The positive electrode tab 21 is connected to a current collector plate 25 that is a bottom plate of the sealing assembly 17 by welding or the like, and a cap 26 of the sealing assembly 17 electrically connected to the current collector plate 25 serves as a positive electrode external terminal. The negative electrode tab 22 is connected, by welding or the like, to an inner face of the bottom face 16a of the outer housing can 16, and the outer housing can 16 serves as a negative electrode external terminal.

The outer housing can 16 is a metal-made container that opens at one end (upper end) in the axial direction, in which the bottom face 16a has a disk shape, and the side wall 16b is formed into a cylindrical shape along an outer circumferential edge of the bottom face 16a. The sealing assembly 17 is formed into a disk shape corresponding to a shape of the opening of the outer housing can 16. The gasket 18 is a resin-made annular member, and is adapted to ensure the sealing property of the interior of the battery and ensure electric insulation between the outer housing can 16 and the sealing assembly 17.

The outer housing can 16 has a caulking portion 31 formed by bending inward an edge (upper end) of the opening so that the caulking portion 31 presses the sealing assembly 17 through the gasket 18. In addition, the outer housing can 16 has a grooved portion 30 formed by causing the side wall 16b to project inward from the outside and configured to support the sealing assembly 17 through the gasket 18. The grooved portion 30 is formed into an annular shape along a circumferential direction of the outer housing can 16 by performing a spinning process on the side wall 16b from the outside.

The caulking portion 31 is formed by bending inward an opening edge of the outer housing can 16, and faces the grooved portion 30 through the sealing assembly 17 and the gasket 18 so that the sealing assembly 17 is held between the caulking portion 31 and the grooved portion 30. The caulking portion 31 is formed into an annular shape along the circumferential direction of the outer housing can 16 in the same manner as the grooved portion 30, and presses a circumferential edge of the sealing assembly 17 from above through the gasket 18. The detailed structure of the sealing assembly 17 will be described later.

The cylindrical battery 10 of the present embodiment has a current interrupt device (CID) and a vent function in the bottom face 16a of the outer housing can 16.

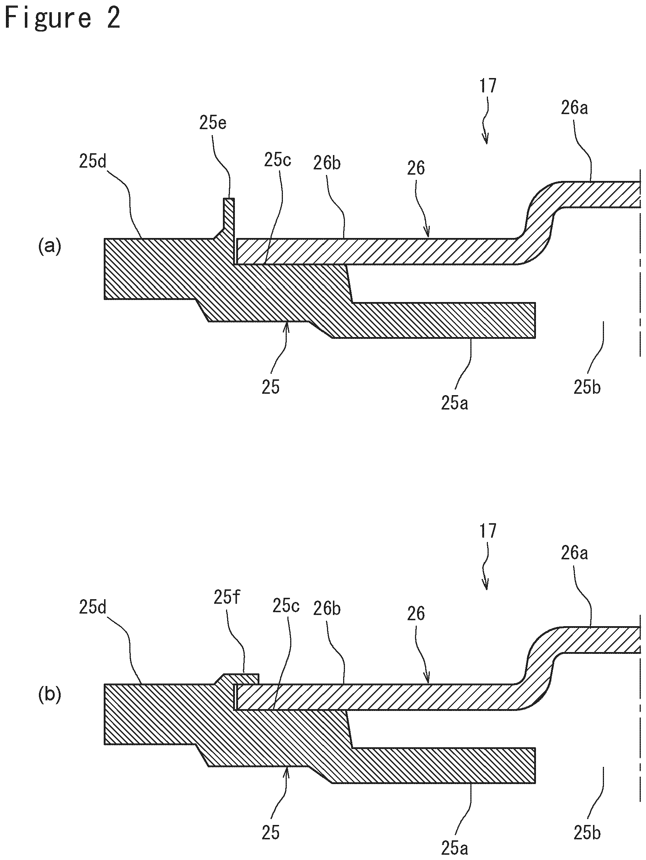

Next, the structure of the sealing assembly 17 in the cylindrical battery 10 of the present embodiment will be described with reference to FIGS. 1 and 2. The sealing assembly 17 of the cylindrical battery 10 of the present embodiment has the current collector plate 25 and the cap 26.

The current collector plate 25 is formed into a disk shape corresponding to a shape of the opening of the outer housing can 16. The current collector plate 25 is placed on the grooved portion 30 in a state in which the gasket 18 is installed to an outer edge, and is fixed by being caulked by an opening edge of the outer housing can 16. The current collector plate 25 has a disk portion 25a having a hole 25b at a center, a seat portion 25c having a thinner thickness than the disk portion 25a on the outer circumferential side of the disk portion 25a, and an outer circumferential portion 25d on the outer circumferential side of the seat portion 25c. As described later, the hole 25b is used to inject the electrolytic solution in a state in which the current collector plate 25 is caulked. The positive electrode tab 21 is welded to a lower face of the disk portion 25a. A flange 26b of the cap 26 is placed on the seat portion 25c. The outer circumferential portion 25d is a portion on which the gasket 18 is installed and which is caulked by the caulking portion 31. As described later, the current collector plate 25 further has fixing portion of the cap 26.

The cap 26 is formed by a disk-shaped metal plate. The cap 26 has a projected portion 26a projecting upward at a center, and the flange 26b extending in an outer diameter direction.
The projected portion 26a of the cap 26 has a function of a connection terminal to be connected to an external terminal. The cap 26 is placed and fixed on the current collector plate 25, thereby also having a function of sealing the outer housing can 16.

As illustrated in FIG. 1, the cap 26 is formed so that an outer diameter of the flange 26b is equal to or slightly smaller than the outer diameter of the seat portion 25c of the current collector plate 25, and is formed to be placeable on the seat portion 25c. As illustrated in FIG. 2(a), the current collector plate 25 of the present embodiment also has an annular protrusion 25e protruding upward on the radial outer circumference of the seat portion 25c. The protrusion 25e caulks the outer edge of the flange 26b of the cap 26 in an inner diameter direction in a state in which the cap 26 is placed on the seat portion 25c, to form a cap caulking portion 25f as illustrated in FIG. 2(b), whereby the cap 26 is fixed. To ensure the sealing degree of the sealing assembly 17, the cap caulking portion 25f and the flange 26b of the cap 26 placed on the seat portion 25c may be laser-welded together in the circumferential direction.

As described above, the flange 26b of the cylindrical battery 10 of the present embodiment is caulked by the protrusion 25e provided on the outer circumference of the seat portion 25c of the current collector plate 25, whereby the outer housing can 16 is sealed (see FIGS. 2(a) and 2(b)).

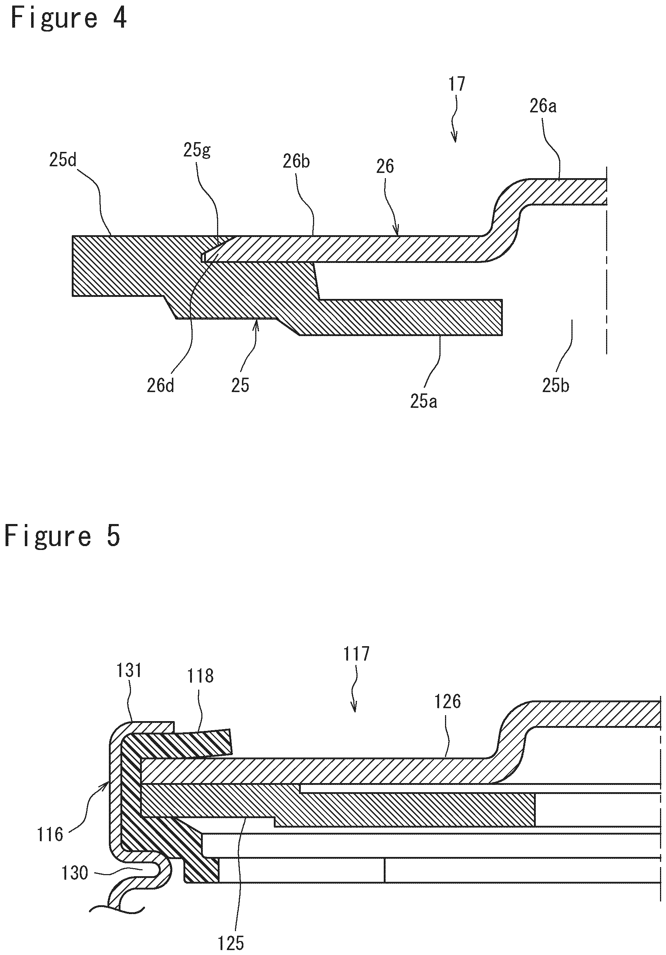

Next a method for manufacturing the cylindrical battery 10 of the present embodiment will be described. The manufacturing method shown in the present embodiment makes it possible to suppress corrosion of the caulking portion 31 of the outer housing can 16. First, there will be described, with reference to FIG. 5, the possibility that corrosion occurs in a caulking portion 131 of an outer housing can 116 of a cylindrical battery having a sealing assembly 117 with a conventional structure.

### <Possibility that Corrosion Occurs in Caulking Portion of Outer housing can in Conventional Sealing Assembly Structure>

In the sealing assembly 117 of the cylindrical battery of FIG. 5, a current collector plate 125 and a cap 126 have a disk shape with the same outer diameter, and are welded together before being caulked by an opening edge of the outer housing can 116. An electrolytic solution is injected in a state in which an electrode assembly is housed in the outer housing can 116. The sealing assembly 117 to which the gasket 118 is installed is inserted in an opening of the outer housing can 116 in the above-described state, and the sealing assembly 117 is fixed by being caulked by an opening edge of the outer housing can 116. When the sealing assembly 117 is inserted, the injected electrolytic solution remains above the grooved portion 130, and therefore, the electrolytic solution remains attached between the inside of the caulking portion 131 and the gasket 118. The electrolytic solution remains on a surface inside the outer housing can 116, which may cause occurrence of corrosion of the caulking portion 131 of the outer housing can 116.

### <Principle of Suppressing Occurrence of Corrosion of Caulking Portion of Outer housing cans in Sealing Assembly Structure of the Present Disclosure>

FIGS. 2(a) and 2(b) each illustrates a structure of the sealing assembly 17 of the cylindrical battery 10 of an embodiment. FIG. 2(a) is a diagram illustrating a state in which the cap 26 is placed on the current collector plate 25, and FIG. 2(b) is a diagram illustrating a state in which the cap 26 is fixed by being caulked by the protrusion 25e of the current collector plate 25.

In the cylindrical battery 10 of the present embodiment, the electrode assembly 14 is housed in the outer housing can 16, and the current collector plate 25 is first fixed by being caulked by an opening edge of the outer housing can 16 with the gasket 18 interposed between the outer housing can 16 and the current collector plate 25 in a state in which the electrolytic solution is not injected into the outer housing can 16. Then, the electrolytic solution is injected from the hole 25b at the center of the current collector plate 25. Then, the cap 26 is placed on the seat portion 25c of the current collector plate 25 to fix an outer circumferential portion of the cap 26 by the fixing portion (the protrusion 25e in FIG. 2) provided in the current collector plate 25. That is, the cylindrical battery 10 according to the present embodiment comprises the bottomed cylindrical outer housing can 16 that houses the electrode assembly 14, and the sealing assembly 17 that seals an opening of the outer housing can 16, in which the sealing assembly 17 has the current collector plate 25, and the cap 26 that is placed and fixed on the current collector plate 25, and the current collector plate 25 has fixing portion for fixing an outer circumferential portion of the cap 26, and therefore the current collector plate 25 is caulked by an opening edge of the outer housing can 16 in a state in which an electrolytic solution is not injected into the outer housing can 16, which makes it possible to then inject the electrolytic solution into the outer housing can 16. Accordingly, there is no possibility that the electrolytic solution is attached to the gasket 18 and the inside of the caulking portion of the outer housing can 16, which can suppress corrosion of the caulking portion 31 of the outer housing can 16. After the current collector plate 25 is caulked, the cap 26 is placed on the current collector plate 25 and is fixed by the fixing portion, and the current collector plate 25 and the cap 26 are further joined by laser welding to thereby ensure the sealing property.

### <Second Embodiment>

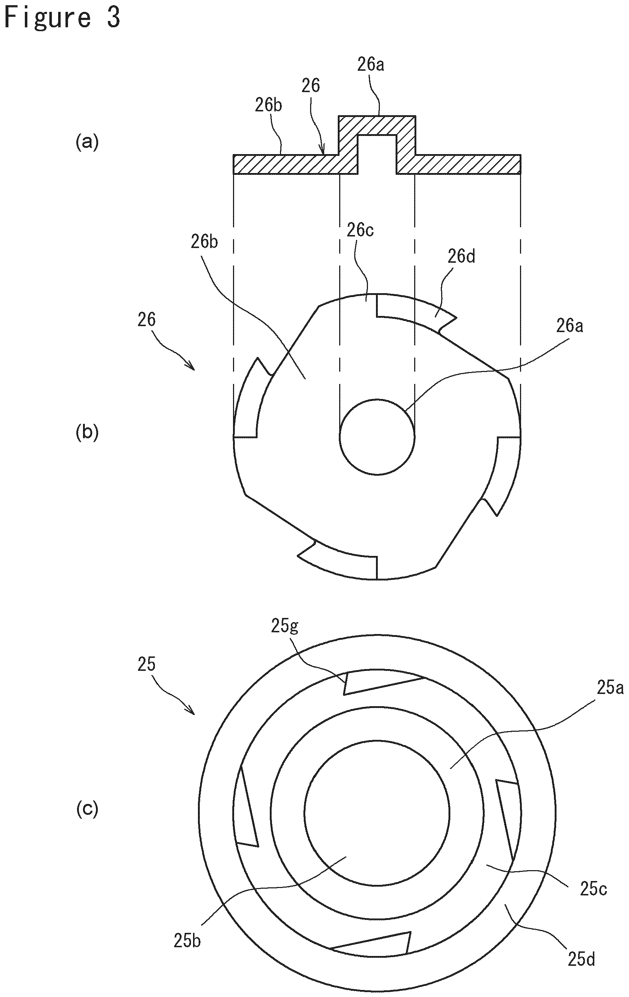

A sealing assembly 17 of a cylindrical battery 10 of a second embodiment will be described with reference to FIGS. 3 and 4. The sealing assembly 17 of the present embodiment has the current collector plate 25 and the cap 26 in the same manner. FIG. 3(a) is a sectional view of the cap 26, FIG. 3(b) is a plan view of the cap 26, and FIG. 3(c) is a plan view of the current collector plate 25. FIG. 4 is a partial enlarged sectional view of the sealing assembly 17, and a diagram including a cross section of a pawl 25g.

In an outer edge of the flange 26b, the cap 26 has a plurality of projections 26c in a circumferential direction, and an inclined portion 26d having a thickness that is thinner in the circumferential direction of each projection 26c. A distance between the two projections 26c at positions facing each other in a radial direction of the cap 26, that is, the maximum diameter of the cap 26 is formed to be equal to or slightly smaller than the outer diameter of the seat portion 25c of the current collector plate 25. The plurality of projections 26c are separated from each other in the circumferential direction, and are formed so that the pawls 25g of the current collector plate 25, which will be described later, can be inserted thereinto.

The current collector plate 25 has, in the outer edge of the seat portion 25c, a plurality of pawls 25g that project in the inner diameter direction. The pawls 25g of the same number as the number of inclined portions 26d of the cap 26 are provided at positions corresponding to the respective inclined portions 26d. The pawls 25g each have a slope corresponding to a slope of the thickness of the inclined portion 26d, and is formed to be able to be fitted to the inclined portion 26d. The current collector plate 25 can fix the cap 26 using the pawls 25g. The current collector plate 25 and the cap 26 are further joined by laser welding to thereby ensure the sealing property.

A method for manufacturing the sealing assembly 17 of the present embodiment is as follows. First, the cap 26 is placed on an upper surface of the current collector plate 25. At this time, the cap 26 is placed so that the pawls 25g are positioned between a plurality of projections 26c of the cap 26. After the cap 26 is placed on the seat portion 25c of the current collector plate 25, the cap 26 is rotated in the circumferential direction on the seat portion 25c and the inclined portions 26d are fitted with the pawls 25g. The cap 26 is rotated in the right direction with respect to the current collector plate 25, so that the inclined portions 26d are fitted with the pawls 25g. As illustrated in FIG. 4, the inclined portions 26d of the cap 26 are fitted with the pawls 25g of the current collector plate 25, and the cap 26 is firmly fixed on the current collector plate 25. To ensure the sealing degree of the sealing assembly 17, it is preferable that the current collector plate 25 and the flange 26b of the cap 26 are laser-welded together in the circumferential direction.

Even in the cylindrical battery 10 of the present embodiment, the current collector plate 25 is caulked by the opening edge of the outer housing can 16 in a state in which the electrolytic solution is not injected into the outer housing can 16, and then the electrolytic solution is injected into the outer housing can 16, which makes it possible to suppress corrosion of the caulking portion 31 of the outer housing can 16 without possibility that the electrolytic solution is attached to the gasket 18 and the inside of the caulking portion 31 of the outer housing can 16.

Next, the effect on the corrosion of the caulking portion 31 of the outer housing can 16 of the cylindrical battery 10 of the present disclosure will be further described with reference to Examples.

### <Example 1>

The cylindrical battery 10 having the sealing assembly 17 of the first embodiment illustrated in FIG. 2 was produced in the following procedure.

Step 1. The grooved portion 30 was formed in the outer housing can 16.

Step 2. The current collector plate 25 was inserted into the gasket 18, and the positive electrode tab 21 was welded to the current collector plate 25.

Step 3. The current collector plate 25 with the gasket 18 was placed on the grooved portion 30, and the opening edge of the outer housing can 16 was caulked.

Step 4. The electrolytic solution was injected from the hole 25b at the center of the current collector plate 25 up to a position of the hole 25b of the current collector plate 25.

Step 5. The cap 26 was placed on the seat portion 25c of the current collector plate 25, and the outer circumferential portion of the cap 26 was caulked by the protrusions 25e of the current collector plate 25.

Step 6. The current collector plate 25 and the cap 26 were welded together.

### <Example 2>

The cylindrical battery 10 having the sealing assembly 17 of the second embodiment illustrated in FIGS. 3 and 4 was produced in the following procedure.

Steps 1 to 4 were performed in the same manner as in Example 1.

Step 5. The projections 26c of the cap 6 were fitted and inserted between the pawls 25g of the current collector plate 25, and the cap 26 was rotated rightward, so that the inclined portions 26d were fitted with the pawls 25g.

Step 6. The current collector plate 25 and the cap 26 were welded together.

### <Comparative Example>

A cylindrical battery of Comparative Example was produced in the following procedure. FIG. 5 illustrates an enlarged sectional view of the produced sealing assembly 117.

Step 1. The grooved portion 130 was formed in the outer housing can 116.

Step 2. The current collector plate 125 and the outer circumferential portion of the cap 126 were welded together, and the sealing assembly 117 was formed.

Step 3. The sealing assembly 117 was inserted in the gasket 118, and the positive electrode tab 121 was welded to the current collector plate 125 in a lower portion of the sealing assembly 117 (not shown).

Step 4. The electrolytic solution was injected from an opening of the outer housing can 116 up to above the grooved portion 130.

Step 5. The sealing assembly 117 was placed on the grooved portion 130, and the opening edge of the outer housing can 116 was caulked.

The manufacturing process of the cylindrical battery 10 in Example 1, 2 includes injecting the electrolytic solution after caulking the outer housing can 16, but the manufacturing process of the cylindrical battery of Comparative Example is different from that of Example 1, 2 in that the electrolytic solution is injected before caulking the outer housing can 16. Therefore, the cylindrical battery of Comparative Example has a structure in which the electrolytic solution is accumulated on the grooved portion 130 and between the gasket 118 and the caulking portion 131. On the other hand, the cylindrical battery 10 of Example 1, 2 can suppress corrosion of the caulking portion 31 of the outer housing can 16 without causing the electrolytic solution to be accumulated above the grooved portion 30.

### <Evaluation of Corrosion of Caulking Portion of Outer housing can>

Ten cylindrical batteries 10 for each of the above-described Examples 1 and 2 and Comparative Example were preserved for 30 days under the high temperature and constant humidity conditions. Then, the appearance and cross section of the caulking portion of the cylindrical battery 10 were observed, and the corrosion of the caulking portion of the outer housing can was evaluated. The test results are shown in Table 1.

**[Table 1]**

| | Example 1 | Example 2 | Comparative example |
|---|---|---|---|
| Appearance observation | No problem in appearance was confirmed about solution leakage, rust and the like | No problem in appearance was confirmed about solution leakage, rust and the like | No problem in appearance was confirmed about solution leakage, rust and the like |
| Cross section observation | No remarkable progression of corrosion was confirmed in all of 10 cells | No remarkable progression of corrosion was confirmed in all of 10 cells | Progression of corrosion (unevenness of about several µm) was confirmed in surface in caulking portion for 10/10 cells |

In the appearance observation for each of cylindrical batteries 10 of Examples 1 and 2 and Comparative Example, no problem in appearance was confirmed about leakage of the electrolytic solution, rust, and the like.

In the results of the cross section observation, no remarkable change (progression of corrosion) was found in all of cylindrical batteries 10 of Examples 1 and 2. Regarding the cylindrical batteries of Comparative Example, unevenness of about several µm was found and progression of the corrosion was confirmed in each caulking portion of all the cylindrical batteries.

The above results shows that the cylindrical battery 10 of Example 1, 2 has an effect of suppressing corrosion of the caulking portion of the outer housing can as compared with the cylindrical battery of Comparative Example.

The present invention is not limited to the above embodiments and modified examples, and various changes and improvements are possible within the matters described in the claims of the present application.

### REFERENCE SIGNS LIST

10 Cylindrical secondary battery, 11 Positive electrode, 12 Negative electrode, 13 Separator, 14 Electrode assembly, 16, 116 Outer housing can, 16a Bottom face, 16b Side wall, 17, 117 Sealing assembly, 18, 118 Gasket, 19 Insulating plate, 20 Insulating plate, 21, 121 Positive electrode tab, 22 Negative electrode tab, 25, 125 Current collector plate, 25a Disk portion, 25b Hole, 25c Seat portion, 25d Outer circumferential portion, 25e Protrusion, 25f Cap caulking portion, 25g Pawl, 26, 126 Cap, 26a Projected portion, 26b Flange, 26c Projection, 26d Inclined portion, 30, 130 Grooved portion, 31, 131 Caulking portion

## Claims

1. A cylindrical battery, comprising:
a bottomed cylindrical outer housing can that houses an electrode assembly; and
a sealing assembly that seals an opening of the outer housing can, wherein
the sealing assembly has a current collector plate, and a cap that is placed and fixed on the current collector plate, and
the current collector plate has fixing portion for fixing an outer circumferential portion of the cap.

2. The cylindrical battery according to claim 1, wherein
the fixing portion is a protrusion that is provided to caulk and fix the outer circumferential portion of the cap.

3. The cylindrical battery according to claim 1, wherein
the cap has an inclined portion having a thickness that is thinner in a circumferential direction in an outer edge of the outer circumferential portion, and
the fixing portion is a pawl that is fitted with the inclined portion.

4. A method for manufacturing a cylindrical battery comprising:
a bottomed cylindrical outer housing can that houses an electrode assembly; and
a sealing assembly that seals an opening of the outer housing can, wherein
the sealing assembly has a current collector plate, and a cap, the method including the steps of:
inserting the current collector plate into the opening of the outer housing can;
caulking the current collector plate by an edge of the opening of the outer housing can;
injecting an electrolytic solution into the outer housing can from a hole of the current collector plate caulked by the edge of the opening;
placing and fixing the cap to the current collector plate; and
welding the cap to the current collector plate.
